# EUROPEAN PATENT APPLICATION

(11) **EP 3 214 605 A1**
(43) Date of publication of application: **06.09.2017**
(21) Application number: 15853811.6
(22) Date of filing: 25.10.2015
(51) Int. Cl.: G07C 9/00, G08G 1/14, H04M 11/00, G06Q 10/02

(54) **SYSTEM AND METHOD FOR CONTROLLING REMOTE ACCESS TO FACILITIES**

(30) Priority: 30.10.2014 ES 201400851
(71) Applicant: López Miranda, Juan, 50360 Daroca (Zaragoza) (ES)
(72) Inventor: López Miranda, Juan, 50360 Daroca (Zaragoza) (ES)
(74) Representative: Sahuquillo Huerta, Jesús
(86) International application number: PCT/ES2015/070772
(87) International publication number: WO 2016/066877

(57) **Abstract**

The invention relates to a system and method for controlling remote access to facilities, comprising a control center (1) with at least one database, where said control center (1) is accessible via a mobile communications device (2) and is connected to a remote system (4) configured for managing remote access to a facility.

## Description

The present invention relates to a system and a method that have been specially designed to allow access to a certain number of facilities, such as garages, offices, among others, by means of using a remote system. The object of the invention is to provide an extremely effective, versatile and secure system which allows accessing, for example, parking spots that are recorded in the system and controlled and managed by the system itself, both in terms of temporary occupation and payment.

### State of the Art

Remote controls for opening doors to access specific facilities, whether they are offices, garages or others, are known. Devices of this type are very limited physically, presenting problems that lie in the following aspects:
- They are limited to a specific frequency and protocol, being programmed for use in a single facility.
- They are not secure and most of them can be duplicated by duplicating machines.
- They do not allow communicating with other smart devices.

On the other hand, opening systems provided with remote controls and additionally having a GSM module which allows opening the door by means of calling different numbers which may have been registered are also known. These systems have several drawbacks:
- It is required to register every new number to which access is allowed.
- They are not secure because they do not validate any security password.
- They do not allow opening the door in the event that there is no GSM coverage.

Public or private parking places that are not always located closest to the user's destination are also known such that there are sometimes private parking spots or facilities that are temporarily unoccupied and would prove to be much more optimal if they could be temporarily occupied by means of renting, which is not carried out in practice because it requires having the key for accessing the relevant facility by radiofrequency or being registered in the GSM module, as well as location and payment management means that are unheard of to date.

### Description of the Invention

The system for controlling access to facilities proposed by the invention solves in a completely satisfactory manner the aforementioned problems as a result of a novel, extremely effective structuring which allows accessing, through a list of relevant spots or facilities, said spots or facilities for temporary occupation thereof by means of payment with the subsequent benefit this entails both for the owners and for occasional clients, regardless of the remote access codes that are required for accessing said facilities and preventing the need to register the user's mobile phone number in the remote system.

To that end, and more specifically, the system of the invention involves the participation of a remote access system which is installed in each of the facilities to be accessed, a server and a GSM device (mobile phone, tablet, phablet)

The central server or system to which the mobile device is connected makes available to the user a large number of parking spots previously registered in the system and possibly located closer than conventional payment spots, guiding the user to said parking spots, opening the remote system and managing payment collection electronically.

The GSM device (mobile telephone, tablet, phablet, laptop or the like) uses the web application or the complementary software installed in the device to obtain a map in which the accessible facilities will be shown, and after choosing, the system will guide the user to the destination point by means of GPS.

Upon reaching the facilities, the client asks the server to open the facilities, the server validates user authenticity by means of a username, password and other alternative security mechanisms, such as a code card.

The server then sends to the remote system the order to open the facilities and the temporary security code (by means of a call, GSM, SMS, mobile data, etc.).

Once the user is registered, the system of the invention therefore allows, for example, renting a private parking spot to any driver who is also registered in the system, allowing temporary access of said driver from the remote system discussed above.

When removing the vehicle or leaving the relevant facility, the user must again ask the server for the opening thereof via the mobile device, the server communicates the opening to the remote system (by means of a call, SMS or mobile data), payment collection being performed at that time depending on the parking duration and allowing the vehicle to leave.

To cover the security and accessibility aspect, when accessing the facilities the server sends the user a private key that is temporarily valid for that user so that they can physically access the facilities to remove their vehicle; this key may be inputted in the physical terminals installed outside and inside the facilities (such as, a numerical keypad, for example), satisfactorily covering any problem derived from of the lack of a landline or mobile telephone network or WIFI in the area.

Throughout the description and claims, the word "comprises" and variants thereof do not intend to exclude other technical features, supplements, components or steps. For those skilled in the art, other objects, advantages and features of the invention will be understood in part from the description and in part from the practice of the invention. The following examples and drawings are provided by way of illustration and are not meant to limit the present invention. Furthermore, the present invention covers all the possible combinations of particular and preferred embodiments herein indicated

### Brief Description of the Drawings

A series of drawings aiding to better understand the invention and expressly related to an embodiment of said invention presented as a non-limiting example thereof is very briefly described below.
Figure 1 shows a schematic diagram of the system for controlling access to facilities by means of a mobile device, an access control server and a remote system.
Figure 2 shows a schematic diagram of the remote system participating in the system of the invention.

### Detailed Description of a Detailed Embodiment of the Invention

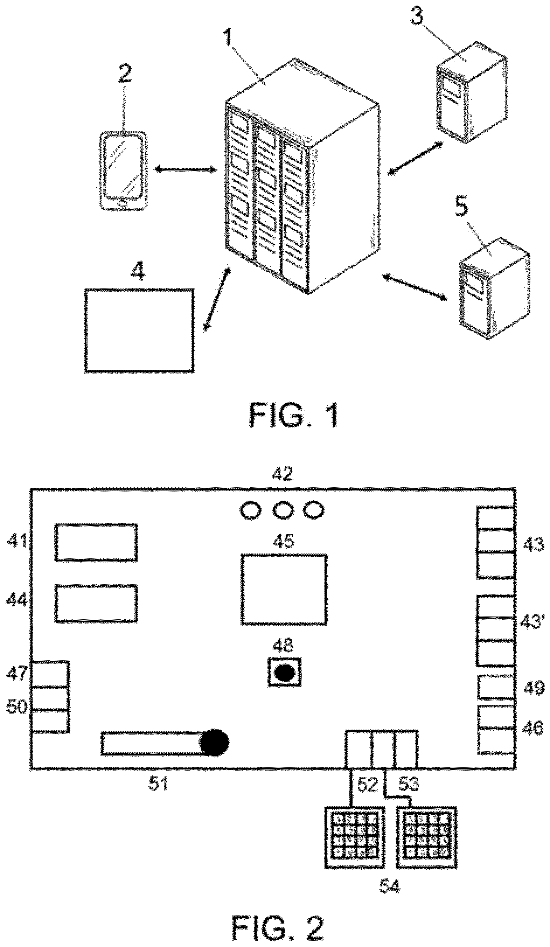

As can be seen in the mentioned drawings, particularly in Figure 1, the system of the invention is made up of a server or control center (1) in which different users, both lessors and lessees, are registered, with personal information, location and characteristics of the facilities for rent, payment means, access keys, among others, being listed in the corresponding database.

Users access this server through their mobile telephone or mobile communications device (2), tablet, computer or a device with Internet connection, such that based on different search filters, the user is offered, for example, a certain number of parking spots available on a map.

The user or lessee chooses the relevant spot and is guided via their mobile device to the location in question by means of connection with the navigation servers (3) existing on the market, by means of GPS.

The remote access system (4) shown in detail in Figure 2 is installed in the lessee's facilities. Said remote access system comprises the following fundamental parts: a GSM SIM card compartment (41); LEDs (42) indicating the status of the apparatus; switching relay (43-43') which is connected to the system for opening the garage door, it will usually be connected in parallel with the physical switch already installed in the building (by push button or key switch), which will allow the current system to also be used; a GSM module (44); a microcontroller or MCU (45) that will contain the software of the device; a 12 V current adaptor (46); an RJ12 connector for fixed telephony connection (47); a reset button (48) which allows resetting the device in the event of a malfunction; a GND ground connector (49); a USB/WIFI connector or an integrated WIFI module (50); a GSM antenna (51); two numerical keypad switch connectors (52); and a communication connector (53) for testing and programming.

This remote system (4) contemplates the use of a landline or mobile telephone network or WIFI so that it can receive the call, SMS message or the mobile data required to be able to open the garage door, and it will also receive the temporary access code with which access to the facilities is provided in the event of a failure in the network communicating with same.

More specifically, the present invention is based on a main server or control center (1) in which a series of users are registered and contained in a database, with information about the location of the different facilities which the users can access via the system and which they select via their mobile telephone (2) or a similar element, such that they are guided to the location via their mobile telephone, after which the server or control center (1) sends the user the vehicle removal security code if there was a subsequent network failure and communicates with the remote system (4) by means of a landline call, mobile phone call, SMS or sending mobile data so that it opens the garage. The microprocessor (45) receives and processes the order by actuating the switching relay (43-43') and the door opens.

To remove the vehicle, the user will make a request to the server, the server will communicate it to the remote system and the door will again be open. In the particular case of there being a remote system communication network failure during removal, the user will input the removal security code (which they received from the server upon entering the facilities) in the numerical keypads (54) that will be located at the entrance and exit of the facilities.

Once payment has been managed by means of access to the corresponding payment server (5), the control center (1) communicates with the remote access system of the garage by means of a call, SMS message or the mobile data required for opening the corresponding door and, accordingly, accessing the required facility.

In terms of the form of payment, the user can pay for using a spot, for example, can pay the lessor leasing out the spot, in many different ways (Visa®, Paypal® or any other equivalent method), the payment being able to be made for hours, days, or even minutes, and before or after hiring the service, these aspects do not, however, affect the physical structure object of the present invention but rather the software and business plan that are to be associated therewith later on, which are not object of the present invention as mentioned.

The present invention provides N users access to N physical facilities without depending on each facility having its own opening device, which is possible with the use of devices that are widely used today, such as a mobile telephone, for example. Furthermore, users can identify themselves by inputting a username, password and other additional security mechanisms such as a code card, providing a security level that is unheard of to date in current systems. One of these means is through a GSM call and listening to speech and sending numerical tones.

Other means for that purpose is the use of an application that the user must have installed in their mobile device, tablet, phablet or other smart device with Internet connection.

The server communicates with the remote access systems installed in different physical locations for opening the door and sending the temporary security code of each user. This is done by means of a GSM call or sending mobile data. In that instant, the server also communicates with the user to send the security code and inform them that the opening has been accepted or refused (if the user is not a valid user or the service is not operative).

The remote access system does not require constantly putting in or removing different numbers which can validate the opening. The opening can only be validated by one or more telephone numbers that the server will make use of. Therefore, the present invention satisfactorily solves the problem relating to the absence of coverage or the availability of landline or mobile communications in current GSM remote access systems by using a security code that the user will input in the numerical keypad which is connected to the remote system for opening the door.

## Claims

1. A method for controlling remote access to facilities, comprising the steps of:
(a) registering in a control center (1) a plurality of users, whose data is contained in a database;
(a.1) and wherein said data comprises at least the location of a plurality of facilities accessible by said users;
(b) selecting a facility contained in the database of the control center (1) via a mobile communications device (2);
(c) guiding the user via said mobile communications device (2) to the location of the selected facility;
(c.1) wherein said mobile communications device (2) is connected to at least one navigation server (3);
(d) accessing a payment server (5) configured for managing service payment;
(e) establishing communication between the control center (1) and a remote system (4) for controlling access to the selected facility;
(e.1) wherein the remote system (4) enables access to the selected facility once it receives the order from the control center (1) and once payment has been made and confirmed by the payment server (5);
**characterized in that** it further comprises the step of:
(f) sending a user security code from the control center (1) to the mobile communications device (2) configured for enabling access to a remote system (4) for controlling access in the event of network failure.

2. The method of claim 1, wherein if the network failure occurs when leaving the facility, the user security code is inputted in the numerical keypads (54).

3. A system for controlling remote access to facilities, comprising a control center (1) with at least one database, wherein said control center (1) is accessible via a mobile communications device (2) and is connected to a remote system (4) configured for managing remote access to a facility, and wherein said system is **characterized in that** it comprises means configured for implementing the method according to any of claims 1 to 2.

4. A product consisting of a computer program with instructions configured for the execution thereof by one or more processors which, when executed by the system of claim 3, cause the method according to any of claims 1 to 2 to be carried out.
